# EUROPÄISCHE PATENTSCHRIFT

(11) **EP 0 991 889 B1**
(45) Veröffentlichungstag und Bekanntmachung des Hinweises auf die Patenterteilung: **16.04.2003**
(21) Anmeldenummer: 98933599.7
(22) Anmeldetag: 09.06.1998
(51) Int. Cl.: F16L 37/084, F16L 37/14

(54) **LÖSBARE SCHNELLKUPPLUNG ZUR AUFNAHME EINES ROHRFÖRMIGEN EINSTECKTEILS**
DETACHABLE, QUICK-FITTING PIPE UNION FOR RECEIVING A PLUG-IN TUBULAR PART
RACCORD RAPIDE DEMONTABLE DESTINE A RECEVOIR UNE PARTIE D'EMMANCHEMENT TUBULAIRE

(30) Priorität: 30.06.1997 DE 19727518
(43) Veröffentlichungstag der Anmeldung: 12.04.2000
(73) Patentinhaber: A. Raymond & Cie, F-38028 Grenoble-Cédex (FR)
(72) Erfinder: MORETTI, Erminio, F-38000 Grenoble (FR); RAYMOND, Albert, F-38170 Seyssinet (FR)
(74) Vertreter: Kirchgaesser, Johannes, Dipl.-Ing.
(86) Internationale Anmeldenummer: EP9803469
(87) Internationale Veröffentlichungsnummer: WO99001690

(56) Entgegenhaltungen:
- EP-A- 0 728 981
- DE-A- 19 540 784
- US-A- 5 452 924

## Beschreibung

Die Erfindung bezieht sich auf eine lösbare Schnellkupplung zur Aufnahme eines rohrförmigen Einsteckteils mit einer umlaufenden Halterippe gemäß dem Oberbegriff des Hauptanspruchs. Das Einsteckteil kann hierbei sowohl das Ende eines stabilen Metallrohres sein, welches beispielsweise für Kraftstoffleitungen verwendet wird. Es kann aber auch aus starrem Kunststoff oder anderem gängigen Spritzgußmaterial bestehen, welches in bekannter Weise mit einer Schlauch- oder Rohrleitung verbindbar ist.

Aus der **EP 0 605 801 A1** ist eine solche Schnellkupplung bekannt, bei welcher die kreisbogenförmigen Stirnflächen der Stützkörper vertikal zur Gehäuseachse radial nach außen gerichtet sind. Mit diesen Stirnflächen liegen die Stützkörper an der eingangsseitigen Innenfläche der Aussparung an, wenn auf das Einsteckteil eine Zugkraft ausgeübt wird. Wie sich in der Praxis gezeigt hat, reicht die hierdurch erzeugte Haltekraft für die Sicherheit der Kraftstoffkupplungen nicht mehr aus. Beim Auftreten hoher Zugkräfte auf das Einsteckteil führt dies zum vorzeitigen seitlichen Abgleiten der Stützkörper und dadurch zum Lösen der Kupplung.

Um bei der vorliegenden Schnellkupplung die Haltekräfte der Haltefeder zu erhöhen und gleichzeitig sicherzustellen, daß die Stützkörper bei großen Abzugskräften nicht seitlich nach außen abgleiten können, ist es aus **DE 195 40 784 A1** bekannt, die Stirnfläche im Bereich der Anlage in Einsteckrichtung um einen Winkel zwischen 15 und 40 ° nach außen abgeschrägt auszubilden. Dadurch wird bei Auftreten von starken Zugkräften zwischen den Stimflächen und der Anlagekante des Gehäuses eine Keilwirkung erreicht, wodurch die Stützkörper umso stärker gegen die Halterippe gedrückt werden, je stärker die Abzugskräfte sind.

Wie sich inzwischen jedoch herausgestellt hat, führt diese Keilwirkung gleichzeitig auch zu einer Verformung der Gehäusewand, und zwar derart, daß die Anlagekanten beim Auftreten von extremen Zugkräften soweit nach außen gedrückt werden können, daß die Stützkörper des Halteelements aus den Aussparungen der Gehäusewand heraustreten und dann aus dem Gehäuse herausgerissen werden.

Um auch diese Möglichkeit des unerwünschten Lösens der Kupplung infolge Auftretens höherer Abzugskräfte auszuschließen, wird erfindungsgemäß vorgeschlagen, an den abgeschrägten Stirnflächen außerhalb des Anlagebereiches radial abstehende Anschlagflächen vorzusehen. Diese können sowohl kreisbogenförmig an den Stimflächen angeformt sein, oder aber es können je zwei radiale Anschlagflächen an den äußeren Ecken der Stirnflächen angeformt sein.

Durch die radial abstehenden Anlageflächen wird auf einfache Weise erreicht, daß sich bei extrem hohen Abzugskräften die von der schrägen Stirnfläche ausgehende, nach außen wirkende Kraftkomponente nur solange zum Aufbiegen der Gehäusewand führt, bis die radiale Anschlagfläche zu Anlage kommt und die Zugkraft nur noch in Richtung parallel zur Kupplungsachse wirkt. Damit ist das weitere Aufbiegen der Gehäusewand unterbunden und die Stützkörper können aus den Aussparungen nicht mehr heraustreten.

Ein Ausführungsbeispiel der Erfindung ist in der Zeichnung dargestellt und soll nachfolgend näher erläutert werden. Es zeigt
- Fig. 1: ein zusammengebautes Schnellkupplungsgehäuse im Längsschnitt nach dem Eindrücken des Einsteckteils im unbelasteten Zustand,
- Fig. 2: die Haltefeder in Vorderansicht,
- Fig. 3: die gleiche Haltefeder im Schnitt germäß Linie III - III in Fig. 2,
- Fig. 4: einen Ausschnitt "A" von der Anschlagfläche in einer vergrößerten Darstellung ,
- Fig. 5: die Haltefeder in einer anderen Ausführungsform,
- Fig. 6: ein zusammengebautes Schnellkupplungsgehäuse wie in Fig. 1, jedoch unter der Einwirkung einer Zugkraft F 1
- Fig. 7: das gleiche Bild wie Fig. 6, jedoch unter der Einwirkung einer extrem starken Zugkraft F2,
- Fig. 8: einen vergrößerten Ausschnitt "B" von der Anschlagsituation in Fig. 6 und
- Fig. 9: einen vergrößerten Ausschnitt "C" von der Anschlagsituation in Fig. 7

Die in den Figuren dargestellte Schnellkupplung besteht aus einem Aufnahmegehäuse **1** und einer Haltefeder **2**, welche aus hartelastischem Kunststoffmaterial hergestellt ist. Die Schnellkupplung dient zur Aufnahme eines rohrförmigen Einsteckteils **3**, welches mit einer umlaufenden Halterippe **4** versehen ist. Dieses Einsteckteil **3** kann sowohl das Ende eines Leitungsrohres aus starrem Werkstoff als auch ein starres Zwischenstück sein, das in bekannter Weise mit dem Ende eines Leitungsrohres aus weicherem Material verbindbar ist.

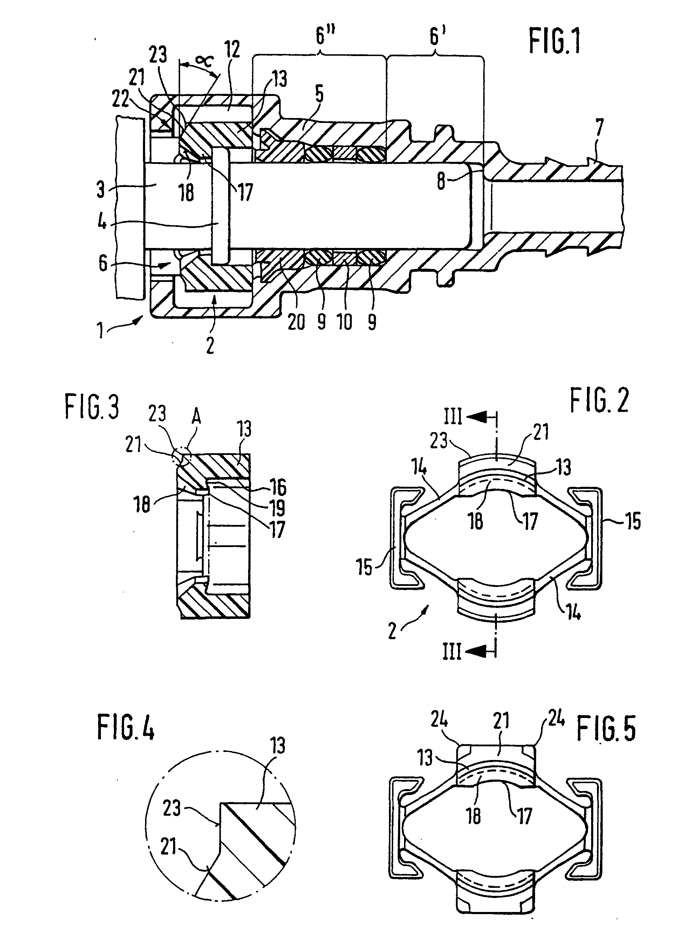

Das aus dem gleichen Kunststoff hergestellte Aufnahmegehäuse **1** besteht gemäß **Figur 1** aus einer zylindrischen Gehäusewand **5** mit einem in mehreren Stufen abgesetzten Aufnahmeraum **6** für das Einsteckteil **3**, einem Anschlag **8** am Ende des Aufnahmeraumes **6** und einem in axialer Verlängerung daran angesetzten, zylindrischen Stutzen **7** zum Anschluß an eine nicht dargestellte Verbindungsleitung für Flüssigkeiten. Der Aufnahmeraum **6** beginnt mit einem Bereich **6'**, dessen Innendurchmeser dem Außendurchmesser des Einsteckteils **3** entspricht. Dem schließt sich ein im Durchmesser erweiterter Bereich **6"** an, der zur Aufnahme von zwei Dichtungsringen **9**, einem Zwischenring **10** und einem Distanzring **20** vorgesehen ist, dessen Innendurchmesser wiederum dem Außendurchmesser des Einsteckteils **3** entspricht.

Diese Haltefeder **2** setzt sich, wie aus Figur 2 ersichtlich, zusammen aus zwei kreisbogenförmigen Stützkörpem **13,** die an ihren Enden über V-förmig zusammengeführte Federstege **14** untereinander verbunden sind, wobei die Verbindungsstellen mit rechteckigen Druckplatten **15** abgedeckt sind, welche in bekannter Weise geringfügig aus einer Aussparung in der Gehäusewand **5** hervorstehen.

Die Stützkörper **13** sind an ihren einander zugekehrten Innenwänden **16** kreisbogenförmig dem Außendurchmesser der Halterippen **4** angepaßt und weisen zwei radial nach innen gerichtete, kreisbogenförmige Haltekanten **17** mit auf der Einsteckseite abgeschrägten Einführflächen **18** und zur entgegengesetzten Seite etwa radial abgesetzten Halteflächen **19** auf, welche die Halterippe **4** des Einsteckteils **3** im eingedrückten Zustand hintergreifen. Die Halteflächen **19** sind vorzugsweise nach außen entgegen der Einsteckrichtung leicht abgeschrägt, so daß die Haltekanten **17** möglichst nahe am Grund der Halterippe **4** anliegen.

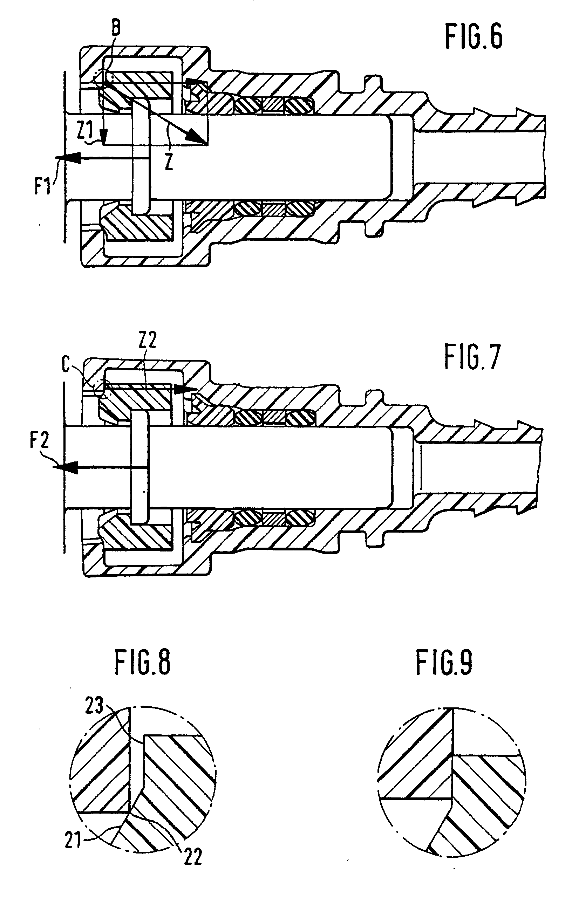

Die Stützkörper **13** sind außerdem mit kreisbogenförmigen Stirnflächen **21** versehen, welche von der Innenkante **22** der Aussparung **12** entgegen der Einsteckrichtung gehalten werden. Diese Stirnflächen **21** sind im Bereich der Anlage in Einsteckrichtung nach außen gegen die Vertikalebene um einen Winkel α zwischen **15°** und **40°** abgeschrägt, wobei der Winkel vorzugsweise bei **25°** liegt. Dadurch wird beim Auftreten von Zugkräften **F1** auf das Einsteckteil **3** die eine Keilwirkung erreicht, wobei die Stirnflächen **21,** wie aus **Fig. 6** ersichtlich, von der Innenkante **22** in Richtung der Kraft **"Z"** nach innen gedrückt werden und die Haltefeder **2** sich mit ihren Haltekanten **17** entsprechend der Kraftkomponente **Z1** noch fester an der Halterippe **4** abstützt.

Gleichzeitig wird aber die Gehäusewand **5** infolge der nach außen gerichteten Reaktionskraft von **Z1** nach außen aufgebogen. Um zu verhindern, daß die Innenkante **22** bei Auftreten von besonders starken Zugkräften **"F2"** soweit nach außen gedrückt wird, daß die Stützkörper **13** der Haltefeder **2** aus der Aussparung **6** heraustreten und mit dem Einsteckteil **3** aus dem Gehäuse **1** herausgerissen werden können, sind an den abgeschrägten Stirnflächen **21** außerhalb des Anlagebereiches radial abstehende Anschlagflächen **23** vorgesehen.

Diese bewirken, daß die aufgrund der Kraftkomponente **Z1** nach außen wirkende Gegenkraft nur solange zum Aufbiegen der Gehäusewand **5** führt, bis die Innenkante **22** die radiale Anschlagfläche **23** erreicht hat. Von da ab drückt die Innenkannte **22** mit einer der Zugkraft **F2** entsprechenden achsparallelen Kraftkomponente **Z2** gegen die radiale Anschlagfläche **23,** so daß die Gehäusewand **5** nicht weiter nach außen aufgebogen wird (**Fig**. **7** und **9** ).

Die radialen Anschlagflächen **23** können, wie aus **Fig. 2** ersichtlich, kreisbogenförmig an die Stirnflächen **21** auf deren ganze Länge angeformt sein. Sie können aber auch, wie aus **Fig. 5** ersichtlich, lediglich in den äußeren Ecken Stirnflächen **21** angeformt sein, was den Vorteil bietet, daß die Aussparungen **6** in der Gehäusewand **5** nicht so tief ausgebildet sein müsen, wie bei der Ausführungsform nach **Fig. 2.**

## Patentansprüche

1. Lösbare Schnellkupplung zur Aufnahme eines rohrförmigen Einsteckteils ( 3 ) mit einer umlaufenden Halterippe ( 4 ), bestehend aus einem zylindrischen Aufnahmegehäuse ( 1 ) mit einem zentralen Aufnahmeraum ( 6 ) zum Einführen des Einsteckteils ( 3 ) und aus einer separaten Haltefeder ( 2 ) aus hartelastischem Kunststoff mit kreisbogenförmig nach innen gerichteten, elastisch auffederbaren Haltekanten ( 17 ) zum Hintergreifen der Halterippe (4) nach dem Eindrücken des Einsteckteils ( 3 ), wobei an den Haltekanten ( 17 ) nach außen abstehende Stützkörper ( 13 ) angeformt sind, welche im eingebauten Zustand zur axialen Festlegung der Haltefeder ( 2 ) im Aufnahmegehäuse ( 1 ) in entsprechende Aussparungen ( 12 ) der Gehäusewand ( 5 ) eintauchen und dort mit ihren ebenfalls kreisbogenförmigen Stirnflächen ( 21 ) von der Innenkante ( 22 ) der Aussparung ( 12 ) entgegen der Einsteckrichtung gehalten werden, und wobei die Stirnflächen ( 21 ) im Bereich der Anlage in Einsteckrichtung nach außen gegen die Vertikalebene um einen Winkel α zwischen 15° und 40° abgeschrägt sind, **dadurch gekennzeichnet, daß** an den abgeschrägten Stirnflächen (21) außerhalb des Anlagebereiches radial abstehende Anschlagflächen (23,24) vorgesehen sind.

2. Lösbare Schnellkupplung nach Anspruch 1, **dadurch gekennzeichnet, daß** die radialen Anschlagflächen (23) kreisbogenförmig an den Stirnflächen (21) angeformt sind.

3. Lösbare Schnellkupplung nach Anspruch 1, **dadurch gekennzeichnet, daß** je zwei radiale Anschlagflächen (24) an den äußeren Ecken der Stirnflächen ( 21 ) angeformt sind.

## Claims

1. A releasable quick-action coupling for receiving a tubular insertion portion (3) with a peripherally extending holding rib (4), comprising a cylindrical receiving housing (I) with a central receiving space (6) for introduction of the insertion portion (3) and a separate holding spring (2) of hard-elastic plastic material with elastically resiliently openable holding edges (17) which are directed inwardly in the shape of a circular arc for engaging behind the holding rib (4) after the insertion portion (3) has been pressed in, wherein formed on the holding edges (17) are outwardly projecting support bodies (13) which in the installed condition for axially fixing the holding spring (2) in the receiving housing (1) extend into corresponding openings (12) in the housing wall (5) and are held there with their end faces (21) which are also in the form of a circular arc, by the inner edge (22) of the opening (12) in opposite relationship to the insertion direction and wherein the end faces (21) in the region of contact are bevelled outwardly in the insertion direction relative to the vertical plane through an angle α of between 15° and 40°, **characterised in that** provided at the bevelled end faces (21) are abutment faces (23, 24) which project radially outside the contact region.

2. A releasable quick-action coupling according to claim 1, **characterised in that** the radial abutment faces (23) are formed in a circular arc at the end faces (21).

3. A releasable quick-action coupling according to claim 1 **characterised in that** two radial abutment faces (24) are respectively formed at the outer comers of the end faces (21).

## Revendications

1. Raccord rapide détachable destiné à recevoir un élément tubulaire embrochable mâle (3) muni d'une nervure de retenue périphérique (4), se composant d'un élément récepteur femelle de forme cylindrique (1), définissant un logement de réception central (6) pour l'introduction de l'élément embrochable mâle (3) et d'un ressort de retenue séparé (2) en matière plastique à cédage élastique dur muni d'arêtes d'accrochage (17) capables de se déformer par cèdagé élastique, orientées vers l'intérieur selon une configuration en arc de cercle, destinées à venir cramponner par derrière la nervure de retenue (4) après l'emmanchement par pression de l'élément embrochable mâle (3), des éléments d'appui (13) faisant saillie vers l'extérieur étant en l'occurrence réalisées solidaires par moulage des arêtes d'accrochage (17), qui, à l'état accouplé du raccord, viennent s'engager, pour immobiliser dans le plan axial le ressort de retenue (2) dans l'élément récepteur femelle (1), dans des évidements (12) ménagés en correspondance dans la paroi du logement (5) et y sont maintenus, au niveau de leurs faces antérieures (21) également profilées en arc de cercle, par le bord intérieur (22) de l'évidement (12) dans le sens contraire de celui de l'emmanchement et les faces antérieures (21) étant en l'occurrence, dans la zone de la portée d'appui, dans le sens de l'emmanchement, inclinées par rapport à la verticale selon un angle α compris entre 15° et 40°, **caractérisé en ce qu'**en dehors de la zone de la portée d'appui, des faces de butées (23, 24), faisant saillie dans le plan radial, sont prévues au niveau des faces antérieures inclinées.

2. Raccord rapide détachable selon la revendication 1, **caractérisé en ce que** les faces de butée radiales (23) sont réalisées solidaires par moulage des faces antérieures (21) selon une configuration en arc de cercle.

3. Raccord rapide détachable selon la revendication 1, **caractérisé en ce que** respectivement deux faces de butée radiales (24) sont réalisées solidaires par moulage des angles extérieurs des faces antérieures (21).
